(19) Europäisches Patentamt
European Patent Office
Office européen des brevets

(11) EP 2 254 746 B1

(12) **FASCICULE DE BREVET EUROPEEN**

(45) Date de publication et mention
de la délivrance du brevet:
**24.10.2012 Bulletin 2012/43**

(21) Numéro de dépôt: **09708246.5**

(22) Date de dépôt: **29.01.2009**

(51) Int Cl.:
**B29C 53/72** *(2006.01)*    **B29D 30/38** *(2006.01)*

(86) Numéro de dépôt international:
**PCT/EP2009/050985**

(87) Numéro de publication internationale:
**WO 2009/098160 (13.08.2009 Gazette 2009/33)**

(54) **Procédé et dispositif de fabrication d'un renfort par enroulement d'une bandelette sur elle-même**

Verfahren und Vorrichtung zur Herstellung einer Verstärkung durch Wickeln eines Bands auf sich selbst

Method and device for making a reinforcement by winding a tape on itself

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.02.2008 FR 0850664**

(43) Date de publication de la demande:
**01.12.2010 Bulletin 2010/48**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **HOMBERT, Christophe**
**F-63000 Clermont-Ferrand (FR)**
• **GOY, Daniel**
**F-63118 Cebazat (FR)**

(74) Mandataire: **Reynaud, Georges**
**Manufacture Française**
**des Pneumatiques Michelin**
**23, place des Carmes-Dechaux**
**SGD/LG/PI-F35-Ladoux**
**63040 Clermont-Ferrand Cedex 9 (FR)**

(56) Documents cités:
WO-A-99/62695        JP-A- 10 217 352
US-A- 2 625 979        US-A- 2 982 327
US-A- 4 957 586        US-A- 5 468 322
US-A1- 2005 039 844

**Description**

L'invention concerne le domaine de la fabrication des pneumatiques destinés à équiper les véhicules roulants, et plus particulièrement l'étape de fabrication des renforts destinés à être assemblés avec les autres composants caoutchoutiques au cour de la réalisation de l'ébauche de pneumatique.

Il est connu de l'état de la technique de disposer des renforts dans différentes zones du pneumatique. Ces renforts sont constitués de fils enrobés dans du caoutchoucs et forment un angle donné avec la direction circonférentielle du pneumatique ; ainsi, les renforts tels que les nappes de renfort carcasse qui forment un angle de 90° sont dits radiaux, et ceux qui forment un angle nul sont connus sous le nom de renfort à zéro degré.

Ces renforts peuvent être déposés directement sur l'ébauche de pneumatique, ou dans le cas plus général provenir de produits intermédiaires, sous forme de nappes, de bandes ou des bandelette composées de renforts enrobés de mélange caoutchouteux et dans lesquels les fils sont disposés parallèlement entre eux tout en formant un angle avec la direction longitudinale de la bande, de la bandelette ou de la nappe.

Le terme fil doit être compris dans un sens tout à fait général, englobant un mono filament, un multi filament, un câblé ou un retors ou un assemblage équivalent, et ceci, quelle que soit la matière de nature textile ou métallique constituant le fil.

Les renforts dont il est question dans la présente description concernent les nappes ou les bandes de renfort formant un angle supérieur à zéro degré avec la direction longitudinale de la bande ou de la nappe.

Ces bandes de renfort présentent la particularité d'être formées par l'écrasement d'un tube, ledit tube étant lui-même formé par l'enroulement en spires jointives selon un angle donné par rapport à la direction longitudinale du tube, d'une bandelette dite droit fils, dans laquelle les fils sont parallèles entre eux et à la direction longitudinale de la bandelette, et enrobés dans un mélange de caoutchouc. La largeur de la bandelette est ajustée en fonction de l'angle avec lequel les spires sont enroulées, de manière à rendre les spires jointives.

On obtient alors une bande de renfort comprenant deux couches de fils superposés, dans laquelle les fils d'une couche sont parallèles entre eux et les fils de couches différentes forment des angles opposés avec la direction longitudinale de la bande, et dans laquelle les fils se prolongent de manière continue d'une couche à une autre.

Ce type de renfort, ainsi que les procédés d'obtention permettant de les fabriquer, sont décrits à titre d'exemple dans la publication FR 1 128 427, ou encore dans les publications JP 10-217 352 ou JP 10-217 353.

La publication FR 1 128 427 propose d'enrouler une bandelette de renfort droit fil autour d'un support cylindrique pour former un tube. Le tube est ensuite aplati entre deux rouleaux. Toutefois, on observe que les tensions longitudinales susceptibles de se produire dans la bande entraînent un serrage du tube sur le support cylindrique et bloquent l'avance du produit ainsi que le bon déroulement du procédé.

La publication JP 10-217 352 présente un dispositif dans lequel la bandelette de renfort droit fil est enroulée autour de son axe longitudinal pour former un tube ; lequel tube est ensuite comprimé ente deux rouleaux pour former une bande de renfort. Ce dispositif comporte un premier moyen pour distribuer la bandelette selon une vitesse linéaire donnée et un second moyen comprenant deux rouleaux destinés à l'écrasement du tube. Le deuxième moyen est mis en rotation relative par rapport au premier moyen autour d'un axe parallèle à la direction de progression de la bandelette ou du tube dans le dispositif. L'axe de rotation correspond sensiblement à l'axe du tube lui-même. Ce dispositif présente toutefois l'inconvénient de ne pas permettre de contrôler avec précision l'angle des fils et l'ajustement bord à bord des spires formant le tube en raison de l'absence de moyen de calibrage du tube.

La publication JP 10-217 353 propose quant à elle de réaliser un tube de caoutchouc par extrusion. Ledit tube de caoutchouc non vulcanisé est ensuite refroidi pour former un tube suffisamment rigide de sorte qu'il soit possible d'enrouler des spires de fil jointives selon un angle donné autour de la surface extérieure dudit tube. Le tube est ensuite réchauffé et comprimé entre deux cylindres pour former la bandelette de renfort. Ce procédé qui nécessite de congeler le tube de caoutchouc pour le rendre rigide, puis de le réchauffer pour lui redonner les caractéristiques propres à sa mise en oeuvre dans les cylindres d'écrasement entre les cylindres, présente l'inconvénient d'être vorace en énergie et d'être peu productif en raison des temps nécessaires aux échange thermiques.

L'objet de l'invention est d'apporter un perfectionnement à la mise en oeuvre de ces dispositifs.

Le dispositif selon l'invention comme défini dans la revendication 1, comprend un premier moyen apte à distribuer une bandelette dont une des faces comporte une feuille intercalaire, et un second moyen comprenant deux rouleaux destinés à l'écrasement d'un tube. Les premier et deuxième moyens sont aptes à être mis en rotation l'un par rapport à l'autre autour d'un axe de rotation parallèle à la direction de progression de la bandelette au sein du dispositif, de manière à ce que, lorsque le dispositif est en fonctionnement, la bandelette s'enroule en spirale autour d'elle-même en spires jointives formant ainsi un tube dont l'axe correspond sensiblement à l'axe de rotation du premier moyen par rapport au second moyen. Ce dispositif se caractérise en ce qu'il comprend un moyen de calibrage du diamètre du tube disposé entre le premier et le deuxième moyen, et en ce que ledit moyen de calibrage porte sur la surface extérieure dudit tube sur laquelle est disposé ledit intercalaire, et un moyen de séparation disposé en aval dudit deuxième moyen et apte à séparer ledit intercalaire de la surface du tube écrasé..

Il a été mis en évidence qu'en faisant porter le dispositif de calibrage sur la surface externe du tube on s'affranchit de cette manière des blocages provoqués par le serrage des spires sur un moyen de calibrage interne et que l'on ajuste de manière précise les bords des spires de manière à les rendre jointives. Le tube ainsi produit présente une surface régulière sans ouvertures et sans superposition des bords de spires, ce qui améliore la qualité de la bande de renfort obtenue après l'écrasement du tube.

La présence de l'intercalaire permet de faciliter le glissement du tube dans les moyens de calibrage.

Le dispositif comprend donc un moyen de séparation disposé en aval dudit deuxième moyen, et apte à séparer ledit intercalaire de la surface du tube écrasé

Le moyen de calibrage peut utilement prendre la forme d'un élément tubulaire de longueur donnée dont l'axe correspond sensiblement à l'axe de rotation du premier moyen par rapport au second moyen.

L'invention porte également sur le procédé défini dans la revendication 10 consistant à mettre en oeuvre le dispositif selon l'invention. Ce procédé permet la réalisation d'une bande de renfort formée par l'écrasement d'un tube, ledit tube étant lui-même formé par l'enroulement en spires jointives d'une bandelette autour d'elle-même, et enlèvement de l'intercalaire. Des formes préférentiells de l'invention font l'objet des revendications dépendantes.

La description qui suit, qui s'appuie sur un mode préféré de mise en oeuvre de l'invention et s'appuie sur les figures 1 à 5 dans lesquelles,

- la figure 1 représente une vue schématique générale du dispositif selon l'invention,
- la figure 2 représente une vue schématique du tube formé par l'enroulement des spires de façon jointives, et du moyen de calibrage,
- la figure 3 représente une vue schématique d'une bande de renfort obtenue par la mise en oeuvre du dispositif selon l'invention,
- les figures 4 et 5 représentent des vues schématiques de deux formes de réalisation du moyen de calibrage.

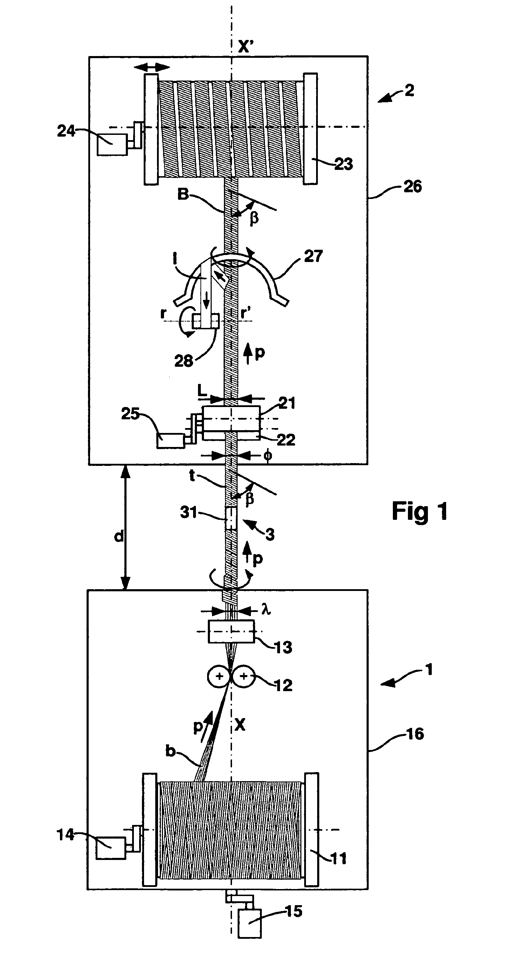

Le dispositif illustré par la figure 1 comporte un premier moyen 1, comprenant un dévidoir de bobine, motorisé par un moteur 14. Une bandelette continue b de largeur λ est enroulée dans la bobine 11.

De manière préférentielle la bandelette de renfort est composée de fils de renfort parallèles entre eux et enrobés dans un matériau caoutchoutique ; Toutefois, le dispositif selon l'invention est apte à mettre en oeuvre toute sorte de bandelette sans qu'il soit nécessaire de modifier de manière substantielle la nature des moyens qui le composent.

Des moyens 12, 13 permettent de guider la bandelette b en sortie du dévidoir de manière à aligner la direction de progression de la bandelette b avec l'axe XX' autour duquel la bandelette b est mise en spirale. Ces moyens sont formés par des jeux de rouleaux dont les axes de rotation sont perpendiculaires. Les éléments composant le premier moyen sont disposés sur un premier châssis 16.

Le dispositif comporte également un second moyen 2 comprenant deux cylindres 21, 22 motorisés à l'aide d'un moteur 25, et aptes à écraser le tube t pour former la bande de renfort B. défini dans la revendication 10

Le moyen de séparation est formé d'un tube d'embarrage (27) de forme semi circulaire disposé dans un plan perpendiculaire à l'axe XX'. Ce tube d'embarrage effectue un mouvement de rotation autour dudit axe XX'. La vitesse de rotation de ce moyen de séparation est ajustée en fonction de la de la vitesse d'avance du tube écrasé, de sorte que à chaque révolution du tube d'embarrage correspond une avance d'une spire complète de la bande B.

Le moyen de séparation comprend également un rouleau (28) de récupération de l'intercalaire (I). Ce rouleau de récupération accompagne le tube d'embarrage 27 dans sa rotation autour de l'axe XX'. Le rouleau de récupération est lui-même entraîné en rotation autour d'un axe rr' de manière. On ajuste la tension d'enroulement de l'intercalaire autour du rouleau de récupération de manière à détacher ledit intercalaire I de la surface du tube écrasé.

Le second moyen comporte également un dispositif 23 de stockage de la bande de renfort, en l'espèce une bobine motorisée par un moteur 24.

Les éléments composant le second moyen sont disposés sur un second châssis 26, indépendant du premier châssis 16.

Le dispositif comporte enfin des moyens aptes à mettre en rotation autour de l'axe XX' le premier châssis 16 et les éléments qu'il contient par rapport au second châssis 26 et aux éléments qu'il contient. Selon l'exemple de mise en oeuvre illustré à la figure 1, un moteur 15 met le premier châssis 1 en rotation autour de l'axe XX', le second châssis 2 étant fixe ; Il est également possible de mettre le second châssis en rotation et de maintenir fixe le premier châssis.

Un moyen de calibrage 3 est placé entre les deux châssis et de préférence est rendu solidaire du châssis restant fixe, en l'espèce le châssis 26 supportant le second moyen 2. De préférence, le moyen de calibrage 3 est solidaire du moyen fixe, en l'espèce du premier moyen 1.

La progression de la transformation de la bandelette au sein du dispositif tel qu'illustré à la figure 1 se décline alors de la manière suivante : la bandelette b issue du dévidoir 11, est alignée avec l'axe XX' à l'aide des moyens de guidage 12, 13. Sous l'effet de la rotation du châssis 16 autour de l'axe XX' la bandelette b s'enroule en spirale autour d'elle-même. Le tube pénètre alors dans le moyen de calibrage 3 de manière à rendre les spires parfaitement jointives, pour former un tube t de diamètre φ. Le tube t passe entre les rouleaux 21 et 22 entre lesquels il est écrasé pour former une bande de renfort B de largeur L. la Bande de renfort B est enroulée sur la bobine 23.

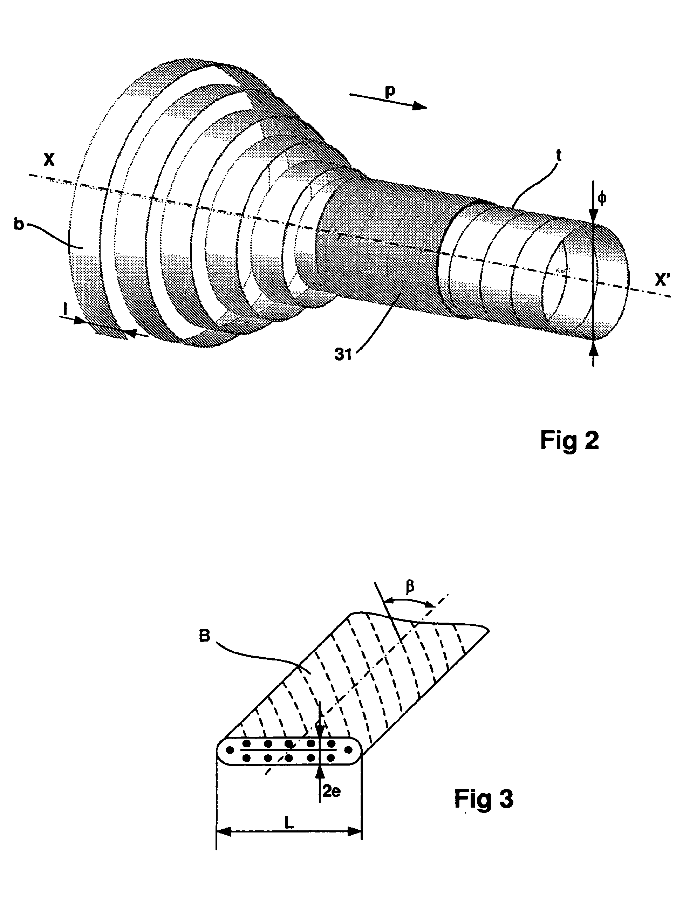

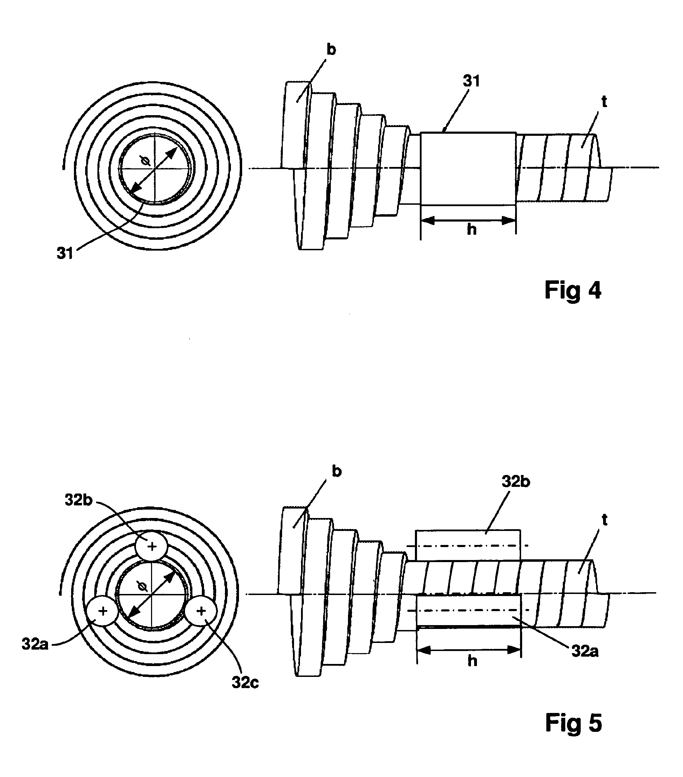

Le moyen de calibrage 3 est formé par un élément tubulaire 31 de longueur h donnée dont l'axe correspond sensiblement à l'axe de rotation XX' du premier moyen 1 par rapport au second moyen 2, comme cela est illustré à la figure 4. Le diamètre intérieur du tube correspond sensiblement au diamètre φ du tube t que l'on souhaite obtenir. Ainsi, en pénétrant à l'intérieur du tube, les spires formées par la bandelette b sont forcées à se mettre en contact les unes avec les autres de manière à former un tube t de forme parfaitement cylindrique en sortie du moyen de calibrage 3, comme cela est illustré à la figure 2. L'axe du tube t est confondu avec l'axe XX'.

On observera que la formation dudit tube est très sensible aux tensions longitudinales susceptibles d'être appliquées à la bandelette ou au tube t.

Ainsi, il est possible d'améliorer la formation des spires jointives en mettant en rotation le tube t autour de l'axe XX'. Le sens de rotation est le même que celui imposé au premier châssis 16 par le moteur 15.

De manière alternative, le moyen de calibrage 3 peut être formé par au moins trois rouleaux cylindriques disposés autour du tube t, comme cela est représenté à la figure 5. Les axes de rotation des rouleaux sont parallèles à l'axe XX' de rotation du premier moyen 1 par rapport au second moyen 2.

On s'arrange alors pour que lesdits rouleaux cylindriques (32a, 32b, 32c) soient disposés les uns par rapport aux autres de sorte que, le polygone passant par les points d'intersection des axes des rouleaux avec un plan perpendiculaire à l'axe XX' soit un polygone régulier, et que le diamètre du cercle passant par l'intersection avec ledit plan des génératrices des rouleaux en contact avec le tube t corresponde au diamètre φ que l'on désire donner au tube t comme cela est représenté à la figure 5 ; En l'espèce, les rouleaux illustrés à la figure 5 sont disposés de manière à former un triangle équilatéral. Par extension, on disposera ainsi l'axe des rouleaux sur les sommets d'un carré, dans le cas d'une configuration dans laquelle on prévoit l'usage de quatre rouleaux.

De manière similaire à ce qui a été dit ci-dessus, on peut mettre les rouleaux cylindriques (32a, 32b, 32c) en rotation autour de leur axe pour faciliter la formation des spires jointives constituant le tube t. Il est aussi possible de mettre les rouleaux cylindriques en rotation autour de l'axe XX'.

Aussi, bien que plus complexes à mettre en oeuvre, les rouleaux présentent l'avantage, du fait de la possibilité de les entraîner en rotation, de réduire les frottements entre la surface externe du tube et le moyen de calibrage et par voie de conséquence de minimiser les tensions longitudinales susceptibles de gêner la jonction des spires bord à bord pour former un tube régulier.

Il découle de ce qui précède que les contacts entre la surface externe du tube t et le moyen de calibrage 3 doivent s'exercer sur un tronçon du tube de longueur h donnée et doivent se produire le long de la circonférence du tube de sorte que la projection de ces points de contact dans un plan perpendiculaire à l'axe XX' soient disposés sur les sommets d'un polygone régulier. Le cercle passant par ces points a sensiblement le diamètre φ du tube t.

On observera que l'augmentation du nombre des sommets du polygone figure alors un cercle, à l'image de ce qui se produit lorsque l'on utilise un élément tubulaire 31.

La longueur h du moyen de calibration est déterminée par expérience et peut favorablement être comprise entre 3 et 5 fois la valeur du diamètre φ du tube t.

La bande de renfort B que l'on cherche à obtenir est définie par sa largeur L et par l'angle β que font les lisières des spires de la bandelette avec la direction longitudinale de la bande. Lorsque la bandelette b comprend des fils de renfort on définit alors la bande B en fonction de l'angle β formé par les fils de renfort avec la direction longitudinale comme cela est illustré à la figure 3. En raison du fait que les spires sont jointives, et pour une bandelette b d'épaisseur e, ces paramètres vont déterminer directement la largeur λ de la bandelette b qu'il est nécessaire de réaliser, selon une relation du type $\lambda = 2 (L - 2e + \pi e)\cos \beta$ , et le diamètre extérieur φ du tube t est déterminé par la relation $\phi = \dfrac{2L - 4e + 2\pi e}{\pi}$ .

Il s'en suit que, pour assurer une formation régulière du tube t et éviter toutes les tensions longitudinales susceptibles de perturber la formation des spires, il convient de réguler de manière précise les vitesses longitudinales du produit entre le premier et le deuxième moyen, de sorte que le rapport entre la vitesse linéaire d'entrée du tube t dans le second moyen 2 et la vitesse linéaire de la bandelette b en sortie du premier moyen 1 soit sensiblement égal au sinus de l'angle β.

A cet effet on agit à l'aide de moyens appropriés sur le moteur 14 entraînant en rotation le dévidoir 11, sur le moteur 25 entraînant les cylindres 21 et 22 ainsi que sur le moteur 24 entraînant la bobine 24. De manière optionnelle il est également possible de prévoir la motorisation des rouleaux 12 et 13.

On s'arrange enfin pour que la distance d entre le premier et le deuxième moyen soit aussi courte que possible pour éviter les tensions longitudinales liées à l'action de la gravité sur la bandelette b.

Dans le but de réduire les tensions longitudinales, on peut également favoriser le glissement de la bandelette à l'intérieur du tube. Ceci peut être obtenu en recouvrant la face de la bandelette (b) destinée à être mise en contact avec la partie interne du moyen de calibration (3) d'une fine couche d'un matériau intercalaire facilement détachable du mélange de nature caoutchoutique. En pratique, ladite fine couche est formée par l'intercalaire utilisé pour éviter le collage des matériaux caoutchoutiques entre eux, lorsque lesdits matériaux sont placés dans un moyen de stockage dans lequel ils se superposent.

L'intercalaire est placé sur une des faces du matériau caoutchoutique que l'on cherche à protéger. La couche de matériau intercalaire permet d'éviter le contact entre les matériaux de nature caoutchoutique non vulcanisés qui ont une tendance naturelle à se lier fortement les uns aux autres lorsqu'ils sont mis en contact. Aussi, le matériau avec lequel on réalise l'intercalaire doit posséder des propriétés d'adhésion particulières avec le matériau caoutchoutique. En effet, il doit rester lié à la face du matériau caoutchoutique qu'il protège lorsque l'on retire du stock ledit matériau caoutchoutique. Il doit donc se séparer facilement des autres matériaux caoutchoutiques qu'il a, par sa présence, évité de mettre en contact avec le matériau à protéger. Par ailleurs, il doit pouvoir également se séparer facilement dudit matériau caoutchoutique qu'il protège lorsque l'on souhaite utiliser, par exemple lors de l'assemblage d'une ébauche de pneumatique, ledit matériau caoutchoutique sans son intercalaire. On entend par « séparable facilement », le fait que les efforts mécaniques à appliquer pour détacher l'intercalaire des matériaux caoutchoutiques ne conduisent pas à une déformation géométrique desdits matériaux caoutchoutiques avec lesquels l'intercalaire a été mis en contact.

Typiquement, dans le cadre de l'application à la mise en oeuvre de l'invention lorsque l'on cherche à réaliser un renfort de nature caoutchoutique, le matériau intercalaire est placé sur une des faces de la bandelette b de manière à permettre le stockage de la bandelette dans la bobine 11 dans laquelle on superpose plusieurs couches de bandelettes les unes sur les autres. L'homme du métier de l'industrie du caoutchouc connaît une variété importante de matériaux pouvant convenir pour la réalisation d'un intercalaire, parmi lesquels on citera, à titre d'exemple, les matériaux thermoplastiques du type polyéthylène ou encore les matériaux textiles à base de fibres de coton.

L'usage de ce dispositif s'applique particulièrement bien à la réalisation de bandes de renfort B formées à partir d'une bandelette b comprenant des fils de renfort et destinées à la réalisation de pneumatiques. Toutefois il est également possible, sans se départir de l'invention d'utiliser le dispositif pour réaliser toutes sortes de bandes à partir de bandelettes de toute nature comme cela a été exposé dans ce qui précède.

## Revendications

1. Dispositif destiné à la réalisation d'une bande (B) de renfort formée par l'écrasement d'un tube (t) comprenant un premier moyen (1) apte à distribuer une bandelette (b) comprenant un intercalaire (I) sur une de ses faces, selon une vitesse linéaire donnée et un second moyen (2) comprenant deux rouleaux (21, 22) destinés à l'écrasement dudit tube (t), dans lequel lesdits premier et deuxième moyens sont aptes à être mis en rotation l'un par rapport à l'autre autour d'un axe de rotation (XX') parallèle à la direction de progression (p) de la bandelette (b) au sein du dispositif, de manière à ce que, lorsque le dispositif est en fonctionnement, la bandelette (b) s'enroule en spirale autour d'elle même en spires jointives pour former un tube (t) dont l'axe correspond sensiblement à l'axe de rotation (XX') du premier moyen (1) par rapport au second moyen (2), **caractérisé en ce qu'**il comprend

   - un moyen (3) de calibrage du diamètre du tube (t) disposé entre le premier et le deuxième moyen, tel que, lorsque le dispositif est en fonctionnement, ledit moyen de calibrage (3) porte sur la surface extérieure dudit tube (t) sur laquelle est disposé ledit intercalaire (I) et,
   - un moyen de séparation (27) disposé en aval dudit deuxième moyen, et apte à séparer ledit intercalaire (I) de la surface du tube écrasé.

2. Dispositif selon la revendication 1, dans lequel le moyen de calibrage (3) est formé par un élément tubulaire cylindrique (31) de longueur donnée (h) dont l'axe correspond sensiblement à l'axe de rotation (XX') du premier moyen (1) par rapport au second moyen (2) et dont le diamètre intérieur (31) correspond sensiblement au diamètre extérieur ($\phi$) que l'on désire donner au tube (t).

3. Dispositif selon l'une des revendications 1 ou 2, dans lequel le moyen de calibration (31) est apte à être mis en rotation autour de son axe parallèle à l'axe de rotation (XX') du premier moyen (1) par rapport au second moyen (2).

4. Dispositif selon la revendication 1, dans lequel le moyen de calibrage (3) est formé par au moins trois rouleaux cylindriques (32a, 32b, 32c) de longueur donnée (h), et dont les axes sont parallèles à l'axe de rotation (XX') du premier moyen (1) par rapport au second moyen (2).

5. Dispositif selon la revendication 4, dans lequel les rouleaux (32a, 32b, 32c) sont disposés les uns par rapport aux autres de sorte que le polygone passant par les points d'intersection des axes des rouleaux avec un plan perpendiculaire à l'axe XX' soit un polygone régulier, et dans lequel le diamètre du cercle passant par l'intersection avec ledit plan des génératrices des rouleaux en contact avec le tube t corresponde au diamètre ($\phi$) que l'on désire donner au tube (t).

6. Dispositif selon l'une des revendications 4 ou 5, dans lequel les rouleaux (32a, 32b, 32c) sont aptes à être mis en rotation par rapport à l'axe de rotation(XX') du premier moyen (1) par rapport au second moyen (2).

7. Dispositif selon l'une des revendications 4 à 6, dans lequel chacun des rouleaux (32a, 32b, 32c) est apte à être mis en rotation autour de son axe parallèle à l'axe de rotation (XX') du premier moyen (1) par rapport au second moyen (2).

8. Dispositif selon l'une des revendications 2 ou 4, dans lequel la valeur de la longueur (h) du moyen de calibration est comprise entre 3 et 5 fois la valeur du diamètre extérieur ($\phi$) du tube (t).

9. Dispositif selon l'une des revendications précédentes dans lequel ledit moyen de séparation est formé d'un tube d'embarrage (27) de forme semi circulaire disposé dans un plan perpendiculaire à l'axe XX' et effectuant un mouvement de rotation autour dudit axe XX'.

10. Procédé de réalisation d'une bande (B) de renfort formée par l'écrasement d'un tube (t) d'axe XX', ledit tube étant lui-même formé par l'enroulement en spires jointives d'une bandelette (b) autour d'elle-même,
**caractérisé en ce qu'**il consiste à mettre en oeuvre un dispositif selon l'une des revendications 1 à 9.

11. Procédé selon la revendication 10 dans lequel, avant d'écraser le tube (t), on ajuste son diamètre extérieur ($\phi$) pour rendre les spires de la bandelette (b) jointives, en faisant circuler le tube (t) à l'intérieur d'un moyen de calibrage (3), de manière à ce que les contacts entre la surface externe du tube (t) et le moyen de calibrage (3) s'exercent sur un tronçon du tube (t) de longueur (h) donnée et se produisent le long de la circonférence du tube (t) de sorte que la projection de ces points de contact dans un plan perpendiculaire à l'axe (XX') du tube (t) soient disposés sur les sommets d'un polygone régulier.

12. Procédé selon la revendication 11, dans lequel la bandelette (b) est formée par une nappe de fils de renfort, parallèles entre eux, orientés selon la direction longitudinale de la bandelette (b), et enrobés dans un mélange de nature caoutchoutique.

13. Procédé selon la revendication 12, dans lequel la bande B comprend deux couches de fils superposées l'une sur l'autre, dans laquelle les fils de renfort d'une couche sont parallèles entre eux et les fils de renfort de couches différentes forment des angles opposés ($\beta$) avec la direction longitudinale de la bande (B), et dans laquelle les fils se prolongent de manière continue d'une couche à une autre.

14. Procédé selon la revendication 13, dans lequel on détermine la largeur ($\lambda$) de la bandelette (b) en fonction de la largeur (L) et de l'angle d'orientation des fils ($\beta$) de la bande (B) que l'on cherche à produire.

15. Procédé selon la revendication 14 dans lequel on régule les vitesses longitudinales du produit entre le premier et le deuxième moyen, de sorte que le rapport entre la vitesse linéaire d'entrée du tube (t) dans le second moyen (2) et la vitesse linéaire de la bandelette (b) en sortie du premier moyen (1) soit sensiblement égal au sinus de l'angle $\beta$.

## Claims

1. Device intended for creating a reinforcing strip (B) formed by flattening a tube (t) comprising a first means (1) able to dispense a tape (b) comprising an interleaf (I) on one of its faces, at a given linear speed, and a second means (2) comprising two rolls (21, 22) intended to flatten the said tube (t), in which device the said first and second means are able to be set in rotation relative to one another about an axis of rotation (XX') parallel to the direction (p) in which the tape (b) progresses through the device, so that when the device is operating, the tape (b) is wound in a spiral on itself in contiguous turns to form a tube (t) the axis of which corresponds substantially to the axis (XX') of rotation of the first means (1) with respect to the second means (2),
**characterized in that** it comprises

- a means (3) of calibrating the diameter of the tube (t) and positioned between the first and second means, such that, when the device is in operation the said calibration means (3) rests against the exterior surface of the said tube (t) on which surface the said interleaf (I) is positioned and,
- a separation means (27) positioned downstream of the said second means and able to separate the said interleaf (I) from the surface of the flattened tube.

2. Device according to Claim 1, in which the calibration means (3) is formed of a cylindrical tubular element (31) of given length (h) the axis of which corresponds substantially to the axis (XX') of rotation of the first means (1) with respect to the second means (2) and the inside diameter (31) of which corresponds substantially to the outside diameter ($\phi$) that the tube (t) is to have.

3. Device according to one of Claims 1 and 2, in which the calibration means (31) is able to be set in rotation about its axis parallel to the axis (XX') of rotation of the first means (1) with respect to the second means

**4.** Device according to Claim 1, in which the calibrating means (3) is formed of at least three cylindrical rolls (32a, 32b, 32c) of given length (h) and the axes of which are parallel to the axis (XX') of rotation of the first means (1) with respect to the second means (2).

**5.** Device according to Claim 4, in which the rolls (32a, 32b, 32c) are positioned relative to one another in such a way that the polygon passing through the points of intersection of the axes of the rolls with a plane perpendicular to the axis XX' is a regular polygon and in which the diameter of the circle passing through the intersection with the said plane of the generatrixes of the rolls in contact with the tube t corresponds to the diameter ($\phi$) that the tube (t) is to have.

**6.** Device according to one of Claims 4 and 5, in which the rolls (32a, 32b, 32c) are able to be set in rotation with respect to the axis (XX') of rotation of the first means (1) with respect to the second means (2).

**7.** Device according to one of Claims 4 to 6, in which each of the rolls (32a, 32b, 32c) is able to be set in rotation about its axis parallel to the axis (XX') of rotation of the first means (1) with respect to the second means (2).

**8.** Device according to one of Claims 2 and 4, in which the value of the length (h) of the calibration means ranges between 3 and 5 times the value of the outside diameter ($\phi$) of the tube (t).

**9.** Device according to one of the preceding claims, in which the said separation means is formed of a direction-change guide tube (27) of semicircular shape positioned in a plane perpendicular to the axis XX' and effecting a rotational movement about the said axis XX'.

**10.** Method of producing a reinforcing strip (B) formed by flattening a tube (t) of axis XX', the said tube being itself formed by winding a tape (b) upon itself in contiguous turns
**characterized in that** it consists in implementing a device according to one of Claims 1 to 9.

**11.** Method according to Claim 10 in which, before the tube (t) is flattened, its outside diameter ($\phi$) is adjusted to make the terms of the tape (b) contiguous by causing the tube (t) to run along inside a calibrating means (3) so that the contacts between the external surface of the tube (t) and the calibrating means (3) are applied to a stretch of tube (t) of given length (h) and occur along the circumference of the tube (t) such that the projection of these points of contact in a plane perpendicular to the axis (XX') of the tube (t) lie at the vertices of a regular polygon.

**12.** Method according to Claim 11, in which the tape (b) is formed of a web of mutually parallel reinforcing threads directed in the longitudinal direction of the tape (b) and coated with a rubber-type compound.

**13.** Method according to Claim 12, in which the strip B comprises two layers of threads which layers are superposed on one another, where the reinforcing threads of one layer are mutually parallel and the reinforcing threads of different layers make opposite angles ($\beta$) with the longitudinal strip (B), and in which the threads run on continuously from one layer to another.

**14.** Method according to Claim 13, in which the width ($\lambda$) of the tape (b) is determined as a function of the width (L) and of the angular orientation ($\beta$) of the threads of the strip (B) that is to be produced.

**15.** Method according to Claim 14, in which the longitudinal speeds of the product between the first and the second means are regulated so that the ratio between the linear speed at which the tube (t) enters the second means (2) and the linear speed at which the tape (b) leaves the first means (1) is substantially equal to the sine of the angle $\beta$.

**Patentansprüche**

**1.** Vorrichtung, die zur Herstellung eines durch das Zusammenquetschen eines Rohrs (t) geformten Verstärkungsbands (B) bestimmt ist, die eine erste Einrichtung (1), die ein Bändchen (b), das eine Zwischenlage (I) auf einer seiner Seiten enthält, gemäß einer gegebenen linearen Geschwindigkeit ausgeben kann, und eine zweite Einrichtung (2) enthält, die zwei Walzen (21, 22) enthält, die zum Zusammenquetschen des Rohrs (t) bestimmt sind, wobei die erste und die zweite Einrichtung um eine Drehachse (XX') parallel zur Vorschubrichtung (P) des Bändchens (b) innerhalb der Vorrichtung zueinander in Drehung versetzt werden können, damit, wenn die Vorrichtung in Betrieb ist, das Bändchen (b) sich in aneinandergrenzenden Windungen spiralförmig um sich selbst wickelt, um ein Rohr (t) zu formen, dessen Achse im Wesentlichen der Drehachse (XX') der ersten Einrichtung (1) bezüglich der zweiten Einrichtung (2) entspricht,
**dadurch gekennzeichnet, dass** sie enthält

- eine Einrichtung (3) zum Kalibrieren des Durchmessers des Rohrs (t), die zwischen der ersten und der zweiten Einrichtung angeordnet ist, so dass, wenn die Vorrichtung in Betrieb ist, die Kalibrierungseinrichtung (3) auf der Außenfläche des Rohrs (t) liegt, auf der die Zwischenlage (I) angeordnet ist, und
- eine Trenneinrichtung (27), die hinter der zweiten Einrichtung angeordnet ist und die Zwischenlage (I) von der Fläche des zusammengequetschten Rohrs trennen kann.

2. Vorrichtung nach Anspruch 1, bei der die Kalibriereinrichtung (3) von einem zylindrischen rohrförmigen Element (31) gegebener Länge (h) geformt wird, dessen Achse im Wesentlichen der Drehachse (XX') der ersten Einrichtung (1) bezüglich der zweiten Einrichtung (2) entspricht, und dessen Innendurchmesser (31) im Wesentlichen dem Außendurchmesser (φ) entspricht, der dem Rohr (t) verliehen werden soll.

3. Vorrichtung nach einem der Ansprüche 1 oder 2, bei der die Kalibriereinrichtung (31) um ihre Achse parallel zur Drehachse (XX') der ersten Einrichtung (1) bezüglich der zweiten Einrichtung (2) in Drehung versetzt werden kann.

4. Vorrichtung nach Anspruch 1, bei der die Kalibriereinrichtung (3) von mindestens drei zylindrischen Walzen (32a, 32b, 32c) gegebener Länge (h) geformt wird und deren Achsen parallel zur Drehachse (XX') der ersten Einrichtung (1) bezüglich der zweiten Einrichtung (2) sind.

5. Vorrichtung nach Anspruch 4, bei der die Walzen (32a, 32b, 32c) so zueinander angeordnet sind, dass das durch die Schnittpunkte der Achsen der Walzen mit einer Ebene lotrecht zur Achse XX' verlaufende Polygon ein gleichmäßiges Polygon ist, und bei der der Durchmesser des Kreises, der durch den Schnittpunkt mit der Ebene der Mantellinien der Walzen in Kontakt mit dem Rohr t geht, dem Durchmesser (φ) entspricht, der dem Rohr (t) verliehen werden soll.

6. Vorrichtung nach einem der Ansprüche 4 oder 5, bei der die Walzen (32a, 32b, 32c) bezüglich der Drehachse (XX') der ersten Einrichtung (1) bezüglich der zweiten Einrichtung (2) in Drehung versetzt werden können.

7. Vorrichtung nach einem der Ansprüche 4 bis 6, bei der jede der Walzen (32a, 32b, 32c) um ihre Achse parallel zur Drehachse (XX') der ersten Einrichtung (1) bezüglich der zweiten Einrichtung (2) in Drehung versetzt werden kann.

8. Vorrichtung nach einem der Ansprüche 2 oder 4, bei der der Wert der Länge (h) der Kalibriereinrichtung zwischen dem Drei- und dem Fünffachen des Werts des Außendurchmessers (φ) des Rohrs (t) liegt.

9. Vorrichtung nach einem der vorhergehenden Ansprüche, bei der die Trenneinrichtung von einem halbkreisförmigen Drehspannrohr (27) geformt wird, das in einer Ebene lotrecht zur Achse XX' angeordnet ist und eine Drehung um die Achse XX' ausführt.

10. Verfahren zur Herstellung eines Verstärkungsbands (B), das durch das Zusammenquetschen eines Rohrs (t) einer Achse XX' geformt wird, wobei das Rohr selbst durch das Wickeln eines Bändchens (b) um sich selbst in aneinandergrenzenden Windungen geformt wird,
**dadurch gekennzeichnet, dass** es darin besteht, eine Vorrichtung nach einem der Ansprüche 1 bis 9 zu verwenden.

11. Verfahren nach Anspruch 10, bei dem vor dem Zusammenquetschen des Rohrs (t) sein Außendurchmesser (φ) eingestellt wird, um die Windungen des Bändchens (b) aneinander angrenzen zu lassen, indem das Rohr (t) im Inneren einer Kalibriereinrichtung (3) derart umlaufen gelassen wird, dass die Kontakte zwischen der Außenfläche des Rohrs (t) und der Kalibriereinrichtung (3) auf einen Abschnitt des Rohrs (t) einer gegebenen Länge (h) ausgeübt werden und entlang des Umfangs des Rohrs (t) entstehen, so dass die Projektion dieser Kontaktpunkte in eine Ebene lotrecht zur Achse (XX') des Rohrs (t) an den Spitzen eines gleichmäßigen Polygons angeordnet sind.

12. Verfahren nach Anspruch 11, bei dem das Bändchen (b) von einer Lage von zueinander parallelen Verstärkungsdrähten geformt wird, die in der Längsrichtung des Bändchens (b) ausgerichtet und mit einer Mischung von Kautschukbeschaffenheit umhüllt sind.

13. Verfahren nach Anspruch 12, bei dem das Band B zwei Schichten von übereinander angeordneten Drähten enthält, bei dem die Verstärkungsdrähte einer Schicht zueinander parallel sind und die Verstärkungsdrähte unterschiedlicher Schichten zur Längsrichtung des Bands (B) entgegengesetzte Winkel (β) bilden, und bei dem die Drähte sich kontinuierlich von einer Schicht zur anderen verlängern.

14. Verfahren nach Anspruch 13, bei dem die Breite (λ) des Bändchens (b) abhängig von der Breite (L) und dem Ausrichtungswinkel der Drähte (β) des Bands (B) bestimmt wird, das hergestellt werden soll.

15. Verfahren nach Anspruch 14, bei dem die Längsgeschwindigkeiten des Produkts zwischen der ersten und der zweiten Einrichtung so geregelt werden, das das Verhältnis zwischen der linearen Eingangsgeschwindigkeit des Rohrs (t) in die zweite Einrichtung (2) und der linearen Geschwindigkeit des Bändchens (b) am Ausgang der ersten Einrichtung (1) im Wesentlichen gleich dem Sinus des Winkels $\beta$ ist.

**Fig 1**

**Fig 2**

**Fig 3**

**Fig 4**

**Fig 5**

**EP 2 254 746 B1**

## RÉFÉRENCES CITÉES DANS LA DESCRIPTION

### Documents brevets cités dans la description

- FR 1128427
- JP 10217352 A
- JP 10217353 A